# EUROPEAN PATENT APPLICATION

(11) **EP 4 183 648 A1**
(43) Date of publication of application: **24.05.2023**
(21) Application number: 21845460.1
(22) Date of filing: 14.06.2021
(51) Int. Cl.: B60W 10/04, B60W 10/20, B60W 10/08, B60W 30/045, B60W 50/02

(54) **VEHICLE CONTROL DEVICE**

(30) Priority: 20.07.2020 JP 2020123784
(71) Applicant: DENSO CORPORATION, Kariya-city, Aichi 448-8661 (JP)
(72) Inventor: KOUNO, Masaki, Kariya- city, Aichi 4488661 (JP)
(74) Representative: TBK
(86) International application number: PCT/JP2021/022478
(87) International publication number: WO 2022/019002

(57) **Abstract**

A control apparatus (70) includes a control unit (72) and an information acquiring unit (71). The control unit is configured to control a turning apparatus (40) turning at least one wheel and at least one electric motor, the at least one wheel including a tire. The information acquiring unit is configured to acquire steering related information including a steering angle of a steering wheel of the vehicle and at least one of a steering angular velocity, a steering angular acceleration, and a steering angular jerk of the steering wheel. The control is configured to execute turning control for controlling force to be applied to the tire of the at least one wheel to turn the vehicle by driving the at least one electric motor and the turning apparatus based on the steering related information in a coordinated manner.

## Description

### CROSS-REFERENCE TO RELATED APPLICATION

The present application is based on and claims the benefit of priority from Japanese Patent Application No. 2020-123784 filed July 20, 2020, the entire contents of which are incorporated herein by reference.

### [Technical Field]

The present disclosure relates to a control apparatus for a vehicle.

### [Background Art]

In the related art, PTL 1 listed below describes a control apparatus for a vehicle. The control apparatus for a vehicle described in PTL 1 includes a yaw acceleration calculating unit and a driving force control unit. The yaw acceleration calculating unit acquires the yaw acceleration of the vehicle. The driving force control unit reduces the driving force of a motor, corresponding to a power source for the vehicle, in accordance with the yaw acceleration acquired by the yaw acceleration calculating unit. With increasing yaw acceleration, the driving force control unit executes control by increasing the driving force reduction amount, which reducing the increase rate of the driving force reduction amount to asymptotically reduce the driving force to a predetermined upper limit value. With this configuration, when steering of the vehicle is started to start increasing the yaw acceleration, the increase rate of the driving force reduction amount of the motor decreases with increasing yaw acceleration. Thus, while the vehicle is traveling through a curve, the degree of deceleration occurring in the vehicle is unlikely to be excessive. This allows the behavior of the vehicle to be controlled in such a manner that the driver performs natural, stable operation during turning of the vehicle.

### [Citation List]

### [Patent Literature]

[PTL 1] Japanese Patent No. 5999360

### [Summary of the Invention]

Methods available for turning the vehicle include a method for turning wheels of the vehicle to turn the vehicle and a method for increasing or reducing torque transmitted from the motor to the wheels as in the control apparatus described in PTL 1. The latter method has quicker responsiveness than the former method, and can thus turn the vehicle earlier. However, when the vehicle is turned by increasing or reducing only the torque transmitted from the motor to the wheels as in the control apparatus described in PTL 1, the behavior of the vehicle in this case is unlikely to reflect the intention of the driver, possibly leading to an uncomfortable feeling for the driver.

An object of the present disclosure is to provide a control apparatus for a vehicle, the control apparatus enabling turning responsiveness to be improved while alleviating the uncomfortable feeling of the driver.

According to an aspect of the present disclosure, a control apparatus controls a vehicle driven by transmitting torque from at least one electric motor to at least one wheel. The control apparatus includes a control unit and an information acquiring unit. The control unit is configured to control the at least one electric motor and a turning apparatus turning the at least one wheel. The information acquiring unit is configured to acquire steering related information including a steering angle of a steering wheel of the vehicle and at least one of a steering angular velocity, a steering angular acceleration, and a steering angular jerk of the steering wheel. The control unit is configured to execute turning control for controlling a force to be applied to the tire of the at least one wheel to turn the vehicle by driving the at least one electric motor and the turning apparatus based on the steering related information in a coordinated manner.

The driver, for example, quickly operates the steering wheel in a case of desiring to turn the vehicle quickly, and slowly operates the steering wheel in a case of desiring to slowly turn the vehicle. Consequently, at least one of the steering angular velocity, steering angular acceleration, and steering angular jerk of the steering wheel is a parameter reflecting the intention of the driver to turn. When the vehicle is turned, turning responsiveness of the vehicle can be improved by changing the power of the electric motor as well as turning the wheels by the turning apparatus. Consequently, as in the above-described configuration, when the vehicle is turned, the power of the electric motor is changed based on at least one of the steering angular velocity, steering angular acceleration, and steering angular jerk of the steering wheel. Thus, the vehicle can have improved turning responsiveness and can be turned with the intention of the driver reflected. Accordingly, the driver can have any uncomfortable feeling alleviated.

### [Brief Description of the Drawings]

Fig. 1 is a block diagram illustrating a general configuration of a vehicle of an embodiment.
Fig. 2 is a block diagram illustrating an electrical configuration of the vehicle of the embodiment.
Fig. 3 is a diagram schematically illustrating a force acting on wheels when the vehicle turns.
Figs. 4(A) and 4(B) are tables showing the directions of forces applied by motor generators and forces applied to tires when the vehicle makes a left turn and the directions of forces applied by the motor generators and forces applied to the tires when the vehicle makes a right turn.
Fig. 5 is a flowchart illustrating a procedure of processing executed by an ECU of the embodiment.
Fig. 6 is a map illustrating a relationship between a steering angular velocity ωs and a target response speed Jc of a steering wheel, the map being used by the ECU of the embodiment.
Figs. 7(A) and 7(B) are a map illustrating a relationship between the target response speed Jc and a ratio rx of longitudinal forces and a map illustrating a relationship between the target response speed Jc and a ratio ry of lateral forces.
Fig. 8 is a block diagram illustrating a general configuration of a vehicle of another embodiment.
Fig. 9 is a block diagram illustrating a general configuration of a vehicle of another embodiment.

### [Description of Embodiments]

An embodiment of a control apparatus of a vehicle will be described with reference to the drawings. For easier understanding of the description, in the drawings, the same components are denoted by the same reference numerals wherever possible, and duplicate descriptions are omitted.

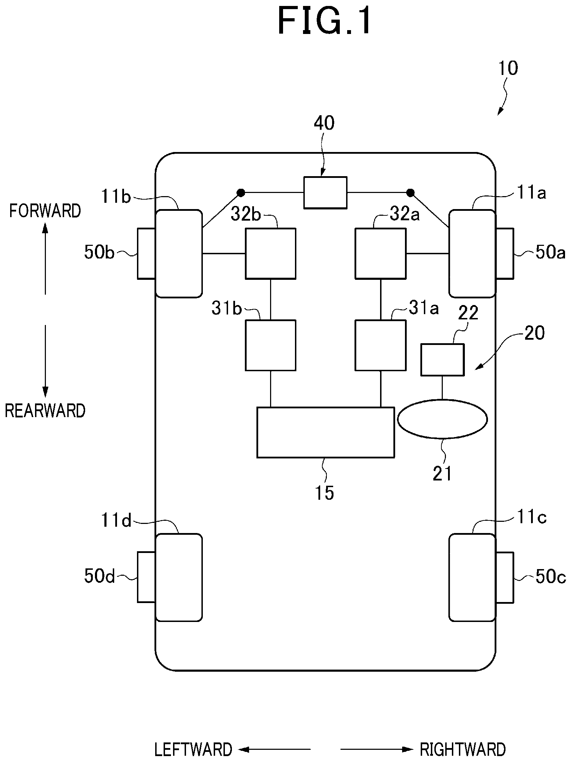

First, a general configuration of a vehicle equipped with a control apparatus of the present embodiment will be described. As illustrated in Fig. 1, a vehicle 10 of the present embodiment includes a steering apparatus 20, inverter apparatuses 31a and 31b, motor generators 32a and 32b, a turning apparatus 40, and brake apparatuses 50a to 50b.

The steering apparatus 20 and the turning apparatus 40 constitute a so-called by-wire steering system in which a steering wheel 21 operated by the driver is not mechanically coupled to wheels 11a and 11b. The steering apparatus 20 includes the steering wheel 21 and a steering angle sensor 22. The steering angle sensor 22 detects a steering angle θs corresponding to a rotation angle of the steering wheel 21, and outputs a signal corresponding to the detected steering angle θs. The turning apparatus 40 changes the turning angle of each of the wheels 11a and 11b based on the steering angle θs detected by the steering angle sensor 22.

Note that in the example described in the present embodiment, for simplification, the turning apparatus 40 controls the turning angles of the respective wheels 11a and 11b to the same angle but that the turning apparatus 40 may be capable of controlling the turning angles of the wheels 11a and 11b to different values.

The inverter apparatuses 31a and 31b convert DC power fed from a battery 15 mounted in the vehicle 10 into three-phase AC power, and feed the resultant three-phase AC power to each of the motor generators 32a and 32b.

The motor generators 32a and 32b operate as an electric motor during acceleration of the vehicle 10. In a case of operating as an electric motor, the motor generators 32a and 32b performs driving based on the three-phase AC power fed from the inverter apparatuses 31a and 31b. Driving forces of the motor generators 32a and 32b are respectively transmitted to the wheels 11a and 11b, which thus rotate to accelerate the vehicle 10.

The motor generators 32a and 32b can operate as generators during deceleration of the vehicle 10. In a case of operating as generators, the motor generators 32a and 32b perform regenerative operation to generate power. The regenerative operation of the motor generators 32a and 32b respectively applies braking forces to the wheels 11a and 11b. The inverter apparatuses 31a and 31b convert the three-phase AC power generated by the regenerative operation of the motor generators 32a and 32b into DC power, with which the battery 15 is charged. In the present embodiment, the motor generator 32a corresponds to a first electric motor, and the motor generator 32b corresponds to a second electric motor.

As described above, in the vehicle 10, the right front wheel 11a and the left front wheel 11b function as driving wheel, whereas the right rear wheel 11c and the left rear wheel 11d function as driven wheel. The right front wheel 11a and the left front wheel 11b are also collectively referred to as the "driving wheels 11a and 11b." In the present embodiment, the right front wheel 11a corresponds to a right driving wheel, whereas the left front wheel 11b corresponds to a left driving wheel.

Hereinafter, a front-rear direction of the vehicle 10 is referred to as an "Xc direction," whereas a lateral direction of the vehicle 10 is referred to as a "Yc direction." Furthermore, in the front-rear direction Xc of the vehicle 10, a forward direction is referred to as an "Xc1 direction," whereas a rearward direction is referred to an "Xc2 direction." In the lateral direction Yc of the vehicle 10, a right direction is referred to as a "Yc1 direction," whereas a left direction is referred to as a "Yc2 direction."

The brake apparatuses 50a to 50d are provided to the wheels 11a to 11d of the vehicle 10. The brake apparatuses 50a to 50d are frictional brake apparatuses each applying a frictional force to a rotor rotating integrally with a respective one of the wheels 11a to 11d to apply a braking force to a respective one of the wheels 11a and 11b.

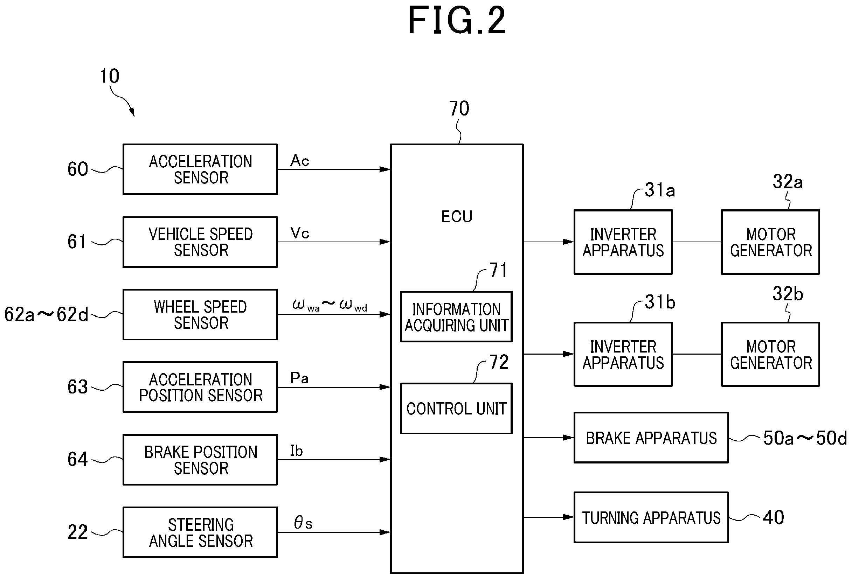

Now, with reference to Fig. 2, an electrical configuration of the vehicle 10 will be described.

As illustrated in Fig. 2, the vehicle 10 further includes an acceleration sensor 60, a vehicle speed sensor 61, wheel speed sensors 62a to 62d, an accelerator position sensor 63, a brake position sensor 64, and an ECU (Electronic Control Unit) 70.

The acceleration sensor 60 detects the acceleration Ac of the vehicle 10 and outputs a signal corresponding to the detected acceleration Ac. The vehicle speed sensor 61 detects a vehicle speed Vc corresponding to a traveling speed of the vehicle 10, and outputs, to the ECU 70, a signal corresponding to the detected vehicle speed Vc. The wheel speed sensors 62a to 62d respectively detect wheel speeds ωwa to ωwd corresponding to the rotation speeds of the wheels 11a to 11d of the vehicle 10, and output, to the ECU 70, signals corresponding to the detected wheel speeds ωwa to ωwd. The accelerator position sensor 63 detects an accelerator position Pa corresponding to the operating position of an accelerator pedal of the vehicle 10, and outputs, to the ECU 70, a signal corresponding to the detected accelerator position Pa. The brake position sensor 64 detects brake operation information Ib indicating whether a brake pedal of the vehicle 10 has been pressed, and outputs, to the ECU 70, a signal corresponding to the detected brake operation information Ib.

The ECU 70 mainly includes a microcomputer including a CPU and a memory and the like. In the present embodiment, the ECU 70 corresponds to a control apparatus. The ECU 70 executes a program prestored in the memory to comprehensively control the vehicle 10.

Specifically, the ECU 70 receives an output signal from the steering angle sensor 22 as well as output signals from the respective sensors 60, 61, 62a to 62d, 63, and 64 described above. Based on the output signals, the ECU 70 acquires information such as the acceleration Ac and vehicle speed Vc of the vehicle 10, the wheel speeds ωwa to ωwd of the wheels 11a to 11d, the accelerator position Pa, the brake operation information Ib, the steering angle θs of the steering wheel 21, and the like.

The ECU 70 executes vehicle traveling control for accelerating and decelerating the vehicle, for example, by controlling output torques from the motor generators 32a and 32b based on the vehicle speed Vc and the accelerator position Pa detected by the vehicle speed sensor 61 and the accelerator position sensor 63. Specifically, based on the vehicle speed Vc and the accelerator position Pa, the ECU 70 uses maps, arithmetic expressions, and the like to calculate target torques Ta* and Tb* respectively corresponding to target values of torques to be applied to the driving wheels 11a and 11b by the motor generators 32a and 32b. Then, based on the target torques Ta* and Tb*, the ECU 70 calculates energization control values to be fed from the inverter apparatuses 31a and 31b to the motor generators 32a and 32b, and controls the inverter apparatuses 31a and 31b based on the energization control values. Thus, the power corresponding to the energization control value is fed from each of the inverter apparatuses 31a and 31b to a respective one of the motor generators 32a and 32b. The actual output torques of the motor generators 32a and 32b are controlled to the target torques Ta* and Tb*.

The ECU 70 executes braking control for controlling the braking force of the vehicle 10 by controlling the brake apparatuses 50a to 50d based on the brake operation information Ib detected by the brake position sensor 64.

Furthermore, the ECU 70 executes turning control for controlling the turning apparatus 40 based on the steering angle θs of the steering wheel 21 detected by the steering angle sensor 22, and the like to turn the vehicle 10. Specifically, based on the steering angle θs and the like, the ECU 70 uses maps, arithmetic expressions, and the like, to calculate target turning angles θw^{∗}, which is a target values of turning angles θw of the driving wheels 11a and 11b. Then, the ECU 70 controls the turning apparatus 40 to set the actual turning angles θw of the driving wheels 11a and 11b to target turning angles θw^{∗}.

On the other hand, in the present embodiment, the ECU 70 uses, in the turning control, the motor generators 32a and 32b to apply driving forces or braking forces to the driving wheels 11a and 11b to improve the turning performance of the vehicle 10, in addition to using the turning apparatus 40 to change the turning angles θw of the driving wheels 11a and 11b.

Now, the principle of the turning control will be described first before describing the turning control of the present embodiment.

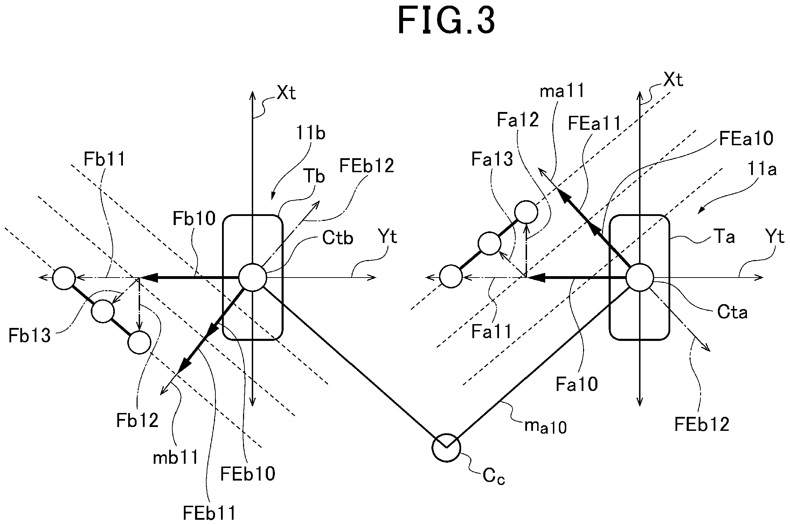

In Fig. 3, arrow Fa10 indicates a force applied to the right front wheel 11a and arrow Fb 10 indicates a force applied to the left front wheel 11b while the vehicle 10 is making a left turn. In Fig. 3, "Cta" denotes the central point of a contact patch of the right tire Ta, whereas "Ctb" denotes the central point of a contact patch of the left tire Tb. "Xt" denotes the axis in the front-rear direction of each of the tires Ta and Tb, whereas "Yt" denotes the axis in the lateral direction of each of the tires Ta and Tb. Furthermore, "Cc" denotes a turning central axis of the vehicle 10. The turning central axis Cc of the vehicle 10 is parallel to a vertical direction of the vehicle 10, and corresponds to an axis passing through the center of gravity of the vehicle 10.

When the driver is assumed to operate the steering wheel 21 leftward while the vehicle 10 is traveling straight ahead, the turning apparatus 40 turns the right front wheel 11a and the left front wheel 11b leftward in order to turn the vehicle 10 leftward. Thus, as illustrated in Fig. 3, the right tire Ta is subjected to the force Fa10 parallel to the tire lateral direction Yt, and the left tire Tb is subjected to the force Fb10 parallel to the tire lateral direction Yt.

On the other hand, when a reference line ma10 is assumed to refer to an axis extending orthogonally to the turning central axis Cc of the vehicle 10 and through the contact central point Ct of the right tire Ta, the direction of an effective turning force contributing to the turning of the vehicle 10 is the direction of the cross product of a direction in which the reference line ma10 extends and the vertical direction of the vehicle 10 which is the direction of a grip force of the right tire Ta. That is, when "ma11" is assumed to denote the direction orthogonal to the reference line ma10 as illustrated in Fig. 3, the direction of the effective turning force in the right tire Ta is parallel to the axis ma11. Similarly, when "mb11" is assumed to denote a direction orthogonal to the reference line b10 corresponding to the left tire Tb as illustrated in Fig. 3, the direction of the effective turning force in the left tire Tb is parallel to the axis mb11.

Consequently, when the tire lateral force Fa10 is assumed to act on the right tire Ta, only a force component FEa10 of the tire lateral force Fa10 contributes to the turning of the vehicle 10, the force component FEa10 acting along the axis ma11. Similarly, only a force component FEb10 of the tire lateral force Fb10 of the left tire Tb contributes to the turning of the vehicle 10, the force component FEb10 acting along the axis mb11. The resultant force of the force component FEa10 and the force component FEb10 becomes the turning force acting on the vehicle 10.

With the leftward turning force being applied to the vehicle 10 as described above, the effective turning forces in the tires Ta and Tb are assumed to be changed from "FEa10 and FEb10" to "FEa11 and FEb11" in order to further increase the turning force of the vehicle 10. In this case, when an attempt is made to change the effective turning force in the right tire Ta from "FEa10" to "FEa11" simply by changing the turning angle of the right front wheel 11a, the right front wheel 11a needs to be turned to change the lateral force in the right tire Ta from "Fa10" to "Fa11." Similarly, the left front wheel 11b needs to be turned to change the lateral force in the left tire Tb from "Fb10" to "Fb11." As described above, when an attempt is made to change the effective turning force by turning the right front wheel 11a and the left front wheel 11b, turning responsiveness may be poor.

On the other hand, in an alternative method for changing the effective turning forces in the tires Ta and Tb from "FEa10 and FEb10" to "FEa11 and FEb11," longitudinal forces Fa12 and Fb12 parallel to the longitudinal direction Xt may be applied to the tires Ta and Tb. Note that the longitudinal force Fa12 to be applied to the right tire Ta is a driving force acting in a direction in which the vehicle 10 is accelerated. On the other hand, the longitudinal force Fb12 to be applied to the right tire Ta is a braking force acting in a direction in which the vehicle 10 is decelerated. The driving forces and braking forces to be applied to the tires Ta and Tb can be achieved by changing the output torques from the motor generators 32a and 32b. The vehicle can have improved turning responsiveness by using the method for changing the output torques from the motor generators 32a and 32b to change the effective turning force as described above compared to the method for turning the right front wheel 11a and the left front wheel 11b.

By combining the method for changing the output torques from the motor generators 32a and 32b with the method for changing the turning angles of the right front wheel 11a and the left front wheel 11b, forces Fa13 and Fb13 illustrated in Fig. 3 can also be respectively be applied to the tires Ta and Tb. By applying such forces Fa13 and Fb13 to the tires Ta and Tb, the vehicle can have changed turning responsiveness.

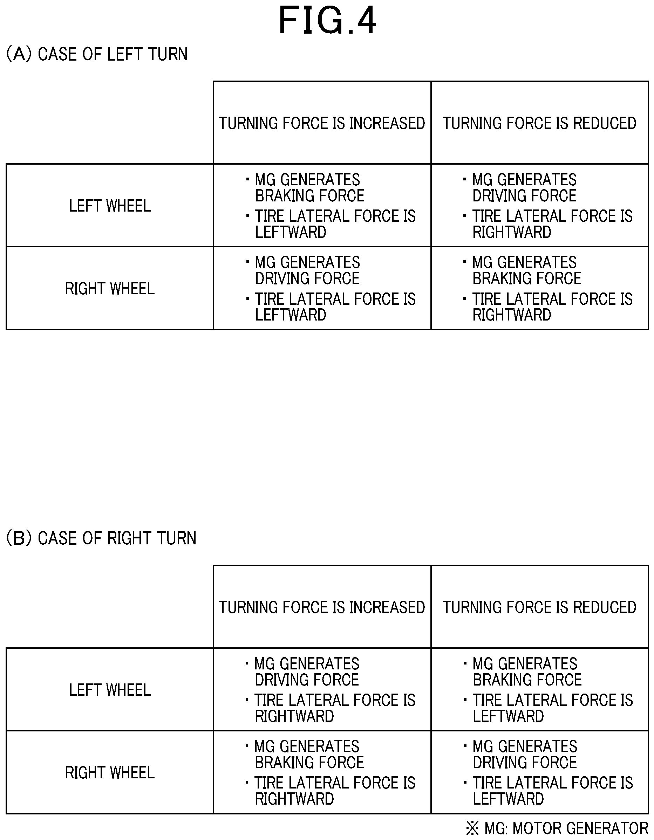

Fig. 4(A) illustrates how to set the directions of the output torques from the motor generators 32a and 32b and the directions of the tire lateral forces in connection with cases of increase and reduction in the turning force of the vehicle 10 during a left turn of the vehicle 10. Fig. 4(B) illustrates how to set the directions of the output torques from the motor generators 32a and 32b and the directions of the tire lateral forces in connection with cases of increase and reduction in the turning force of the vehicle 10 during a right turn of the vehicle 10.

As described above, by combining the method for changing the output torques from the motor generators 32a and 32b with the method for changing the turning angles of the right front wheel 11a and the left front wheel 11b, the vehicle can have changed turning responsiveness. By utilizing this, the ECU 70 in the present embodiment controls the motor generators 32a and 32b and the turning apparatus 40 to make the turning responsiveness of the vehicle 10 quicker in a case where the operator is quick in operating the steering wheel 21. On the other hand, the ECU 70 controls the motor generators 32a and 32b and the turning apparatus 40 to make the turning responsiveness of the vehicle 10 slower in a case where the operator is slow in operating the steering wheel 21.

Now, a configuration of the ECU 70 for executing the turning control for changing the turning force of the vehicle 10 will be specifically described.

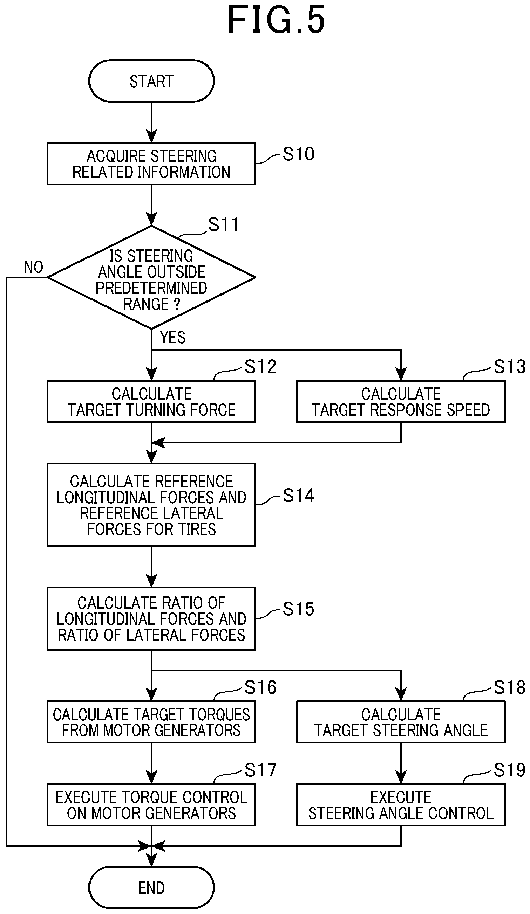

As illustrated in Fig. 2, the ECU 70 includes an information acquiring unit 71 acquiring steering related information required for executing the turning control, and a control unit 72 controlling the motor generators 32a and 32b and the turning apparatus 40. The information acquiring unit 71 and the control unit 72 repeatedly execute processing illustrated in Fig. 5, with a predetermined period.

As illustrated in Fig. 5, the information acquiring unit 71 first acquires steering related information as processing in step S10. The steering related information of the present embodiment includes the steering angle θs and steering angular velocity ωs of the steering wheel 21. The information acquiring unit 71 acquires information of the steering angle θs based on an output signal from the steering angle sensor 22. The information acquiring unit 71 calculates the amount of change in steering angle θs per unit time, in other words, calculates a differential value of the steering angle θs, to acquire information of the steering angular velocity ωs. Note that for the steering angle θs, with the rotation angle defined as "0°" when the steering wheel 21 is in a neutral position, the rotation angle on the right of the neutral position of the steering wheel 21 is represented as a positive value, whereas the rotation angle on the left of the neutral position of the steering wheel 21 is represented as a negative value. For the steering angular velocity ωs, the angular velocity in the rightward direction of the steering wheel 21 is represented as a positive value, whereas the angular velocity in the leftward direction of the steering wheel 21 is represented as a negative value.

As processing in step S11 subsequent to step S10, the control unit 72 determines whether the steering angle θs is outside a predetermined range. The predetermined range is obtained in advance through experiments or the like to allow for determination of whether the vehicle 10 is turning, and is stored in a ROM of the ECU 70. In a case where the control unit 72 makes a negative determination in the processing in step S11, that is, in a case where the steering angle θs is within the predetermined range, the control unit 72 determines that the vehicle 10 is not turning, and temporarily ends the processing illustrated in Fig. 5.

In a case where the control unit 72 makes an affirmative determination in the processing in step S11, that is, in a case where the steering angle θs is outside the predetermined range, the control unit 72 determines that the vehicle 10 is turning, and executes the turning control which is the processing in steps S12 and S13 and the subsequent steps.

The control unit 72 first calculates a target turning force FE which is the target value of turning force of the vehicle 10, as processing in step S12. In the present embodiment, a map indicating a relationship between the steering angle θs and the target turning force FE is created in advance through experiments or the like, and stored in the ROM of the ECU 70.

In the map, the map is basically set in such a manner that the absolute value of the target turning force FE increases as the absolute value of the steering angle θs increases. The map is also set in such a manner that in a case where the steering angle θs has a positive value, that is, in a case where the steering wheel 21 is operated rightward, the target turning force FE has a positive value. The case where the target turning force FE has a positive value indicates that the directions of the effective turning forces in the tires Ta and Tb are directions in which the vehicle 10 is turned rightward, that is, directions FEa12 and FEb12 illustrated by alternate long and two short dashes lines in Fig. 3. The map is also set in such a manner that in a case where the steering angle θs has a negative value, that is, in a case where the steering wheel 21 is operated leftward, the target turning force FE has a negative value. The case where the target turning force FE has a negative value indicates that the directions of the effective turning forces in the tires Ta and Tb are directions in which the vehicle 10 is turned leftward, that is, directions FEa11 and FEb11 illustrated by solid lines in Fig. 3.

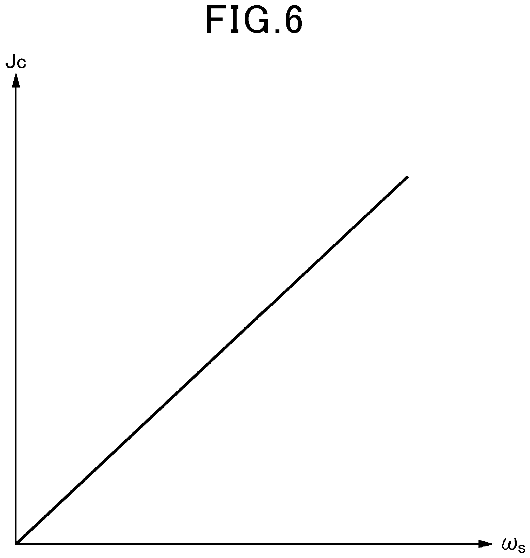

As illustrated in FIG. 5, the control unit 72 calculates a target response speed Jc of the vehicle 10 as processing in step S13. The target response speed Jc indicates the target value of the response speed when the turning force of the vehicle is changed to the target turning force FE, and corresponds to a jerk at a yaw angle which is the rotation angle of the vehicle 10 around the turning central axis Cc. In the present embodiment, a map indicating a relationship between the steering angular velocity ωs of the steering wheel 21 and the target response speed Jc is created in advance and stored in the ROM of the ECU 70. In the map, the target response speed Jc is set to a value increasing as the absolute value of the steering angular velocity ωs of the steering wheel 21 increases. This is because an increasing absolute value of the steering angular velocity ωs of the steering wheel 21 may indicate that the driver is attempting to more quickly turn the vehicle 10. The map indicating the relationship between the steering angular velocity ωs of the steering wheel 21 and the target response speed Jc is created, for example, as illustrated in Fig. 6. The control unit 72 uses the map to calculate the target response speed Jc from the steering angular velocity ωs obtained in the processing in step S10.

As illustrated in Fig. 5, as processing in step S14 subsequent to steps S12 and S13, the control unit 72 calculates reference longitudinal force FBXa and reference lateral force FBYa in the tire Ta and reference longitudinal force FBXb and reference lateral force FBYb in the tire Tb.

The reference lateral force FBYa in the tire Ta and the reference lateral force FBYb in the tire Tb are lateral forces required to be additionally applied to the tires Ta and Tb in order to obtain the target turning force FE in a case where the vehicle 10 is turned simply by turning the right front wheel 11a and the left front wheel 11b. The target turning force FE is the resultant force of the effective turning force of the reference lateral force FBYa and the effective turning force of the reference lateral force FBYb. In the model illustrated in Fig. 3, the lateral forces Fa11 and Fb11 of the tires Ta and Tb respectively correspond to the reference lateral forces FBYa and FBYb. In the present embodiment, a map indicating a relationship between the reference lateral forces FBYa and FBYb and the target turning force FE is obtained in advance through experiments or the like and stored in the ROM of the ECU 70. The ECU 70 uses the map stored in the ROM to calculate the reference lateral forces FBYa and FBYb from the target turning force FE. Note that for the reference lateral forces FBYa and FBYb, positive values represent the directions of forces acting rightward with respect to the tires Ta and Tb, whereas negative values represent the directions of forces acting leftward with respect to the tires Ta and Tb.

The reference longitudinal forces FBXa and FBXb in the tires Ta and Tb are braking forces or driving forces required to be additionally applied to the tires Ta and Tb in order to obtain the target turning force FE in a case where the vehicle 10 is turned simply by applying the braking forces or the driving forces to the tires Ta and Tb. The target turning force FE is the resultant force of the effective turning force of the reference longitudinal force FBXa and the effective turning force of the reference longitudinal force FBXb. In the model illustrated in Fig. 3, the longitudinal forces Fa12 and Fb12 of the tires Ta and Tb respectively correspond to the reference longitudinal force FBXa and FBXb. In the present embodiment, a map indicating a relationship between the reference longitudinal forces FBXa and FBXb and the target turning force FE is obtained in advance through experiments or the like and stored in the ROM of the ECU 70. The ECU 70 uses the map stored in the ROM to calculate the reference longitudinal forces FBXa and FBXb from the target turning force FE. Note that for the reference longitudinal forces FBXa and FBXb, positive values represent driving forces in the direction in which the vehicle 10 is accelerated, whereas negative values represent braking forces in the direction in which the vehicle 10 is decelerated.

As illustrated in Fig. 5, as processing in step S15 subsequent to step S14, the control unit 72 calculates the ratio rx of the longitudinal force to be actually applied to the tire Ta with respect to the reference longitudinal force FBXa and the ratio rx of the longitudinal force to be actually applied to the tire Tb with respect to the reference longitudinal force FBXb, and the ratio ry of the lateral force to be actually applied to the tire Ta with respect to the reference lateral force FBYa and the ratio ry of the lateral force to be actually applied to the tire Tb with respect to the reference lateral force FBYb. Specifically, the control unit 72 calculates the ratio rx of the longitudinal force and the ratio ry of the lateral force based on a map from the target response speed Jc obtained in the processing in step S13. The map is set in such a manner that the ratio rx of the longitudinal force increases, whereas the ratio ry of the lateral force decreases, with increasing target response speed Jc. The ratios rx and ry are set to range, for example, from "0%" to "100%."

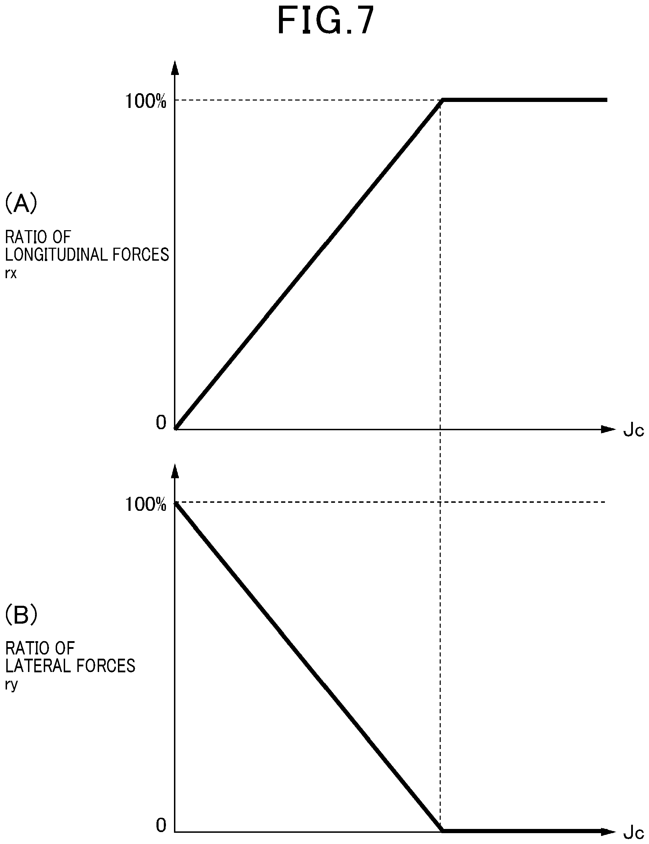

With the use of the ratios rx and ry, the force acting on the right tire Ta is the resultant force of a force obtained by multiplying the reference longitudinal force FBXa by the ratio rx and a force obtained by multiplying the reference lateral force FBYa by the ratio ry. Similarly, the force acting on the left tire Tb is the resultant force of a force obtained by multiplying the reference longitudinal force FBXb by the ratio rx and a force obtained by multiplying the reference lateral force FBYb by the ratio ry. The turning force of the vehicle 10 is defined as the resultant force of an effective turning force corresponding to the force acting on the right tire Ta and an effective turning force corresponding to the force acting on the right tire Tb. The ratios rx and ry are set to make the turning force of the vehicle 10 defined as described above equal to the target turning force FE. The map used to calculate the ratios rx and ry is, for example, as illustrated in Figs. 7(A) and 7(B). As illustrated in Figs. 7(A) and 7(B), the ratios rx and ry are set in such a manner that the total of the ratios is "100%." Note that the total of the ratios rx and ry may be set to a value different from "100%."

As illustrated in Fig. 5, the control unit 72 executes processing in steps S16 to S19 subsequent to step S15. As processing in step S16, the control unit 72 calculates target torques Ta* and Tb* which are target values of torques to be additionally output from the motor generators 32a and 32b. Specifically, the control unit 72 calculates a target right longitudinal force FXa* which is a target value of a longitudinal force to be additionally applied to the right tire Ta by multiplying the reference longitudinal force FBXa obtained in the processing in step S14 by the ratio rx of the longitudinal forces obtained in the processing in step S15. Then, the control unit 72 uses an arithmetic expression and the like to calculate, from the target right longitudinal force FXa*, a target value TMa* of the output torque from the motor generator 32a that enables the target right longitudinal force FXa* to be additionally applied to the right tire Ta. Similarly, the control unit 72 calculates a target left longitudinal force FXb^{∗} based on the reference longitudinal force FBXb of the left tire Tb and the ratio rx of the longitudinal forces, and calculates a target value TMb* of the output torque from the motor generator 32b based on the target left longitudinal force FXb*.

As processing in step S17 subsequent to step S16, the control unit 72 executes torque control on the motor generators 32a and 32b. Specifically, the control unit 72 controls the motor generators 32a and 32b in such a manner that the motor generators 32a and 32b output the target torques TMa* and TMb* obtained in the processing in step S16.

On the other hand, as processing in step S18, the control unit 72 calculates target turning angles θa^{∗} and θb^{∗} which are target values of turning angles through which the right front wheel 11a and the left front wheel 11b are additionally turned. Specifically, the control unit 72 calculates a target right lateral force FYa* which is a target value of a lateral force to be additionally applied to the right tire Ta by multiplying the reference lateral forces FBYa of the right tire Ta obtained in the processing in step S14 by the ratio ry of the lateral forces obtained in the processing in step S15. Then, the control unit 72 uses a map, an arithmetic expression, and the like to calculate, from the target right lateral force FYa*, a target value θa^{∗} of the turning angle of the right front wheel 11a that enables the target right lateral force FYa* to be additionally applied to the right tire Ta. Similarly, the control unit 72 calculates a target value θb^{∗} of the turning angle of the left front wheel 11b based on the reference lateral force FBYb of the left tire Tb and the ratio ry of the lateral forces.

As processing in step S19 subsequent to step S18, the control unit 72 executes turning angle control on the driving wheels 11a and 11b. Specifically, the control unit 72 controls the turning apparatus 40 to turn the wheels 11a and 11b through the target turning angles θa^{∗} and θb^{∗} determined in the processing in step S18.

In the present embodiment described above, the ECU 70 can produce the effects described below in (1) to (4).
(1) In the vehicle 10 of the present embodiment, the control unit 72 executes the turning control for controlling the force to be applied to the tires of the driving wheels 11a and 11b to turn the vehicle 10 by driving the motor generators 32a and 32b and the turning apparatus 40 in a coordinated manner based on the steering related information acquired by the information acquiring unit 71, The driver, for example, quickly operates the steering wheel 21 in a case of desiring to turn the vehicle 10 quickly, and slowly operates the steering wheel in a case of desiring to slowly turn the vehicle 10. Consequently, the steering angular velocity ωs of the steering wheel 21 is a parameter reflecting the intention of the driver to turn. When the vehicle 10 is turned, the turning responsiveness of the vehicle can be changed by changing the power of the motor generators 32a and 32b as well as turning the driving wheels 11a and 11b by the turning apparatus 40. Consequently, as in the ECU 70 of the present embodiment, by changing the power of the motor generators 32a and 32b based on the steering angular velocity ωs of the steering wheel 21, the vehicle can have improved turning responsiveness and can be turned with the intention of the driver reflected. Thus, the driver can have any uncomfortable feeling alleviated.
(2) The control unit 72 calculates the target turning force FE based on the steering angle θs of the steering wheel 21, and calculates the target response speed Jc based on the steering angular velocity ωs of the steering wheel 21. Then, the control unit 72 controls the motor generators 32a and 32b in such a manner that the faster the target response speed Jc, the greater the braking forces or driving forces applied to the tires Ta and Tb by the control of the motor generators 32a and 32b. The control unit 72 controls the turning apparatus 40 in such a manner that the target turning force FE is a turning force corresponding to the resultant force of the tire longitudinal forces applied to the tires Ta and Tb by the control of the motor generators 32a and 32b and the tire lateral forces applied to the tires Ta and Tb by the control of the turning apparatus 40. This configuration allows the turning responsiveness to be achieved as intended by the driver, while turning the vehicle 10 according to the steering angle θs.
(3) When controlling the motor generators 32a and 32b, the control unit 72 makes the torque transmitted from the motor generator 32a to the right front wheel 11a different from the torque transmitted from the motor generator 32b to the left front wheel 1 1b, and specifically makes the torques act in the opposite directions. This configuration allows the vehicle 10 to be more easily turned, and thus the vehicle 10 can have improved turning responsiveness.
(4) The control unit 72 executes the turning control which is the processing in steps S12 and S13 and the subsequent steps illustrated in Fig. 3 in response to the steering angle θs being outside the predetermined range. According to this configuration, when the vehicle 10 is turning, turning responsiveness can be improved.

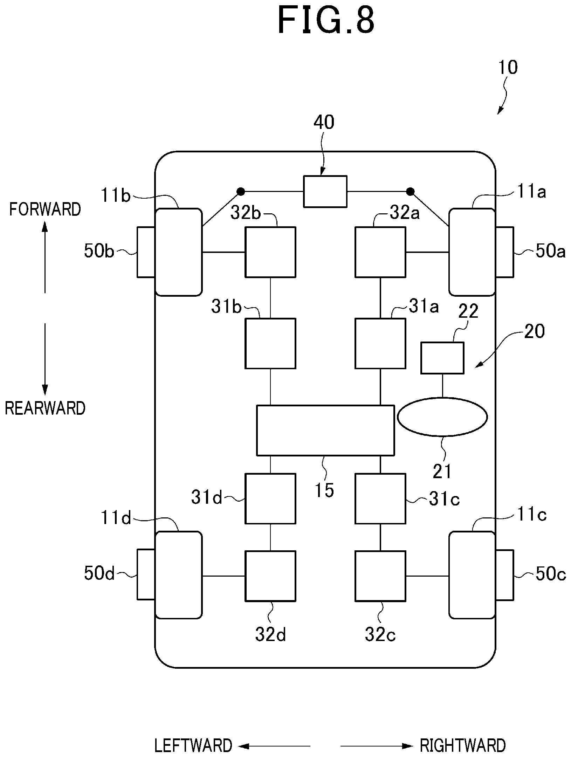

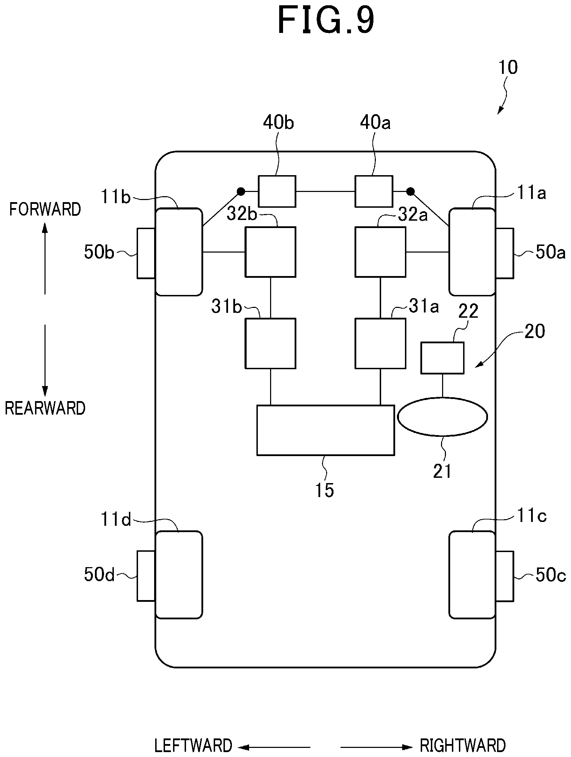

Note that the above-described embodiment can be implemented in another form.
- In a case of detecting an abnormality in one of the motor generators 32a and 32b, the ECU 70 need not perform the turning control illustrated in Fig. 5. In a case where an abnormality occurs in one of the motor generators 32a and 32b, control may be executed in which the vehicle 10 performs evacuation traveling. When the turning control illustrated in Fig. 5 is executed while such evacuation control is being executed, the control operations interfere with each other, possibly leading to unstable behavior of the vehicle 10. Consequently, in a case where an abnormality occurs in one of the motor generators 32a and 32b, the turning control illustrated in Fig. 5 is prevented from being executed, allowing the vehicle 10 to perform evacuation traveling appropriately.
- As illustrated in Fig. 8, the vehicle 10 may further include a motor generator 32c applying a braking force and a driving force to the right rear wheel 11c, an inverter apparatus 31c feeding power to the motor generator 32c, a motor generator 32d applying a braking force and a driving force to the left rear wheel 11d, and an inverter apparatus 31d feeding power to the motor generator 32d.
- As illustrated in Fig. 9, the vehicle 10 may separately include a turning apparatus 40a turning the right front wheel 11a and a turning apparatus 40b turning the left front wheel 11b.
- As a parameter used to calculate the target response speed Jc, the control unit 72 may use a steering angular acceleration or a steering angular jerk of the steering wheel 21 instead of the steering angular velocity ωs of the steering wheel 21. Note that the steering angular jerk is a steering angular accelerated acceleration. In short, the control unit 72 may calculate the target response speed Jc based on at least one of the steering angular velocity ωs, steering angular acceleration, and steering angular jerk of the steering wheel 21.
- The ECU 70 and the control method for the ECU 70 described in the present disclosure may be implemented by one or more dedicated computers provided by configuring a processor and a memory programmed to execute one or more functions embodied by a computer program. The ECU 70 and the control method for the ECU 70 described in the present disclosure may be implemented by a dedicated computer provided by configuring a processor including one or more dedicated hardware logic circuits. The ECU 70 and the control method for the ECU 70 described in the present disclosure may be implemented by one or more dedicated computers configured by a combination of a processor and a memory programmed to execute one or more functions with a processor including one or more hardware logic circuits. A computer program may be stored in a computer-readable non-transitory tangible storage medium as instructions executed by a computer. A dedicated hardware logic circuit and a hardware logic circuit may be implemented by a digital circuit or an analog circuit including a plurality of logic circuits.
- The present disclosure is not limited to the above-described specific example. The above-described examples to which a person skilled in the art adds design changes as appropriate are included in the scope of the present disclosure as long as the examples with the design changes include the features of the present disclosure. The elements included in the specific examples described above, and the arrangements of, the conditions for, and the shapes and the like of the elements are not limited to those illustrated. The combinations of the elements included in the specific examples described above may be changed as appropriate unless the change leads to contradiction.

## Claims

1. A control apparatus (70) for a vehicle, the control apparatus (70) configured to control a vehicle (10) driven by at least one electric motor (32a, 32b, 32c, 32d) transmitting torque to at least one wheel (11a, 11b, 11c, 11d), the at least one wheel including a tire, the control apparatus comprising:
a control unit (72) configured to control the at least one electric motor and a turning apparatus (40, 40a, 40b) turning the at least one wheel; and
an information acquiring unit (71) configured to acquire steering related information including a steering angle of a steering wheel of the vehicle and at least one of a steering angular velocity, a steering angular acceleration, and a steering angular jerk of the steering wheel, wherein
the control unit is configured to execute turning control for controlling a force to be applied to the tire of the at least one wheel to turn the vehicle by driving the at least one electric motor and the turning apparatus based on the steering related information in a coordinated manner.

2. The control apparatus for the vehicle according to claim 1, wherein
the control unit is configured to:
calculate a target turning force which is a target value of a turning force of the vehicle based on the steering angle included in the steering related information,
calculate a target response speed which is a target value of a response speed used when the turning force of the vehicle is changed to the target turning force based on at least one of the steering angular velocity, the steering angular acceleration, and the steering angular jerk included in the steering related information,
control the at least one electric motor such that the faster the target response speed, the greater a braking force or a driving force applied to the tire by the control of the at least one electric motor, and
control the turning apparatus in such a manner that the target turning force is a turning force corresponding to a resultant force of the braking force or the driving force applied to the tire by control of the at least one electric motor and a force applied to the tire by the control of the turning apparatus.

3. The control apparatus for the vehicle according to claim 1 or 2,
the at least one electric motor comprises a first electric motor (32a) and a second electric motor (32b), and the at least one wheel comprises a left driving wheel and a right driving wheel, the first electric motor transmitting power to the right driving wheel and the second electric motor transmitting power to the left driving wheel, wherein
the control unit is configured to, when controlling the first electric motor and the second electric motor based on the steering related information, make torque transmitted from the first electric motor to the right driving wheel different from torque transmitted from the second electric motor to the left driving wheel.

4. The control apparatus for the vehicle according to claim 3, wherein
the control unit is configured not to execute the turning control in a case of detecting an abnormality in one of the right driving wheel and the left driving wheel.

5. The control apparatus for the vehicle according to any one of claims 1 to 4, wherein
the control unit is configured to execute the turning control in response to the steering angle included in the steering related information being outside a predetermined range.
